# EUROPEAN PATENT APPLICATION

(11) **EP 4 603 356 A1**
(43) Date of publication of application: **20.08.2025**
(21) Application number: 24158219.6
(22) Date of filing: 16.02.2024
(51) Int. Cl.: B60W 30/184, G06N 20/00

(54) **METHOD AND APPARATUS FOR ESTIMATING OVER TORQUEEVENTS OF A DRIVESHAFT OF A VEHICLE**

(71) Applicant: Volvo Car Corporation, 405 31 Göteborg (SE)
(72) Inventor: Genson, Jerrad, 438 53 Hindås (SE)
(74) Representative: Nederlandsch Octrooibureau

(57) **Abstract**

A computer implemented method for predicting overtorque events of a driveshaft of a vehicle without using a direct measurement of a torque of the driveshaft of the vehicle, the method comprising collecting vehicle data related to the vehicle (302), preprocessing the vehicle data (304), applying a trained machine learning model to the pre-processed vehicle data to generate torque classifications (306); and computing overtorque events of the driveshaft of the vehicle based on the generated torque classifications (308), wherein the trained machine learning model has been developed based on reference data collected from a plurality of reference vehicles, the reference data comprising torque information received from torque sensors of the reference vehicles.

## Description

### Technical Field

The current disclosure relates to a method and/or an apparatus for estimating overtorque events in the transmission and driveshaft of a vehicle.

### Background Art

Appropriate dimensioning of the driveshaft has been an issue for as long as there have been automobiles with driveshafts. For example, when the torque on the driveshaft exceeds what the driveshaft can tolerate, it can fail catastrophically. On the other hand, if the driveshaft is more robust than needed, it will increase the weight and materials cost of the vehicle unnecessarily. It is therefore important to ensure that the driveshaft is dimensioned correctly.

The known solutions to dimensioning the driveshaft are based on rules of thumb that are not very precise, and trial and error which is time-consuming and expensive to conduct. A faster, more efficient, more precise way to dimension the driveshaft is desired.

### Summary

According to a first aspect, a computer implemented method for predicting overtorque events of a driveshaft of a vehicle without using a direct measurement of a torque of the driveshaft of the vehicle is provided. The method comprises collecting vehicle data related to the vehicle, preprocessing the vehicle data, applying a trained machine learning model to the pre-processed vehicle data to predict torque classifications, and computing overtorque events of the driveshaft of the vehicle based on the predicted torque classifications, wherein the trained machine learning model has been developed based on reference data collected from a plurality of reference vehicles, the reference data comprising torque information received from torque sensors of the reference vehicles.

By using a trained machine model that has been developed and/or selected based on reference data collected from a plurality of reference vehicles, the reference data comprising torque information received from torque sensors of the reference vehicles, it is possible to predict overtorque events for vehicles that do not have torque sensors or for which it is not desirable to use the information from the torque sensor (for example, if the torque sensor malfunctions). This allows to improve the accuracy of the driveshaft dimensioning process, thereby achieving a good balance between safety, durability, weight, and materials cost. It also allows to iterate the dimensioning process more rapidly, improving research and development efficiency. Furthermore, it is also possible to identify new design conditions when the driveline is exposed to high peaks. This approach makes it possible to get feedback on component wear from a larger population of drivers, rather than just the specific driver profiles traditionally used for dimensioning. The predicted overtorque events can also be used to alert a userthat a vehicle needs to be reviewed. For instance, the computer implemented method may be running in a computer or processing device of the vehicle connected to a user interface to provide an alert informing the userthat too many overtorque events are predicted and therefore the driveshaft may be subject to overtorque stress that may be damaging its structure. An overtorque event means in the context of this application that the torque on the vehicle driveshaft exceeds what the motor of the vehicle is maximally capable of producing one or more times in short sequence.

The vehicle data may indicate at least one of: a time stamp identifying a time at which the data was collected, a longitudinal acceleration of the vehicle, a traction battery current of the vehicle, a traction battery voltage of the vehicle, a speed of the vehicle, a front-left wheel speed of the vehicle, a front-right wheel speed of the vehicle, and a drivetrain type of the vehicle. This is suitable data that can give information about the torque of the driveshaft. However, the vehicle data may comprise any other suitable information of the vehicle that has an impact on the torque of the driveshaft. The vehicle may have one or more sensors to obtain the vehicle data such as, for instance, an acceleration sensor for measuring the longitudinal acceleration of the vehicle, one or more speed sensors to measure the speed of the vehicle, the front-left wheel speed of the vehicle, and/or the front-right wheel speed of the vehicle, a current and/or voltage sensor to measure the traction battery current of the vehicle and/or the traction battery voltage of the vehicle, etc. The drivetrain of the vehicle may be stored in a memory.

Preprocessing the vehicle data may comprise at least one of: if the vehicle data indicates the drivetrain type, assigning a binary value to the drivetrain type of the vehicle based on whether the drive train is an all-wheel drive train, AWD or a front-wheel drive train, FWD; if the vehicle data indicates the traction battery current, assigning a predetermined value to traction battery current exceeding a traction battery current threshold; and, if the vehicle data indicates the traction battery current and the traction battery voltage, calculating a traction battery power feature based on the traction battery current and voltage. This allows to preprocessed the vehicle data in a way that makes it suitable for being used to predict overtorque events in an efficient manner.

The collected reference data may indicate at least one of: a time stamp identifying a time at which the reference data was collected, a longitudinal acceleration of the reference vehicle, a traction battery current of the reference vehicle, a traction battery voltage of the reference vehicle, a speed of the reference vehicle, a front-left wheel speed of the reference vehicle, a front-right wheel speed of the reference vehicle, and a drivetrain type of the reference vehicle. The collected reference data may indicate any other relevant information. For instance, the reference vehicles may comprise a plurality of sensors providing further relevant information for the selection of the machine learning model.

The collected reference data may have been preprocessed by performing at least one of: if the collected data indicates the drivetrain type, assigning a binary value to the drivetrain type of the reference vehicle based on whether the drivetrain is an all-wheel drive train, AWD or a front-wheel drive train, FWD; if the collected data indicates the traction battery current, assigning a predetermined maximum value to traction battery current of the reference vehicle exceeding a traction battery current threshold; and, if the collected data indicates the traction battery current and the traction battery voltage, calculating a traction battery power feature, and discretizing the torque information. This allows to preprocessed the collected reference data in a way that makes it suitable for being used to predict overtorque events in an efficient manner.

The torque information may comprise assigning a high torque value to torque information indicating a torque higher or equal than a torque threshold and a low torque value to torque information indicating a torque lower than the torque threshold. The torque threshold might be, for instance, 1800 Newton-meters. In this way, high torque may be considered when the torque in the transmission and driveshaft maybe consider when the transmission and driveshaft experiences a torque above 1800 Newton-meters (Nm) or below -1800Nm. However, any other value instead may be used for the torque threshold.

The method may further comprise oversampling the torque information with a high torque value by using a synthetic minority oversampling technique.

The trained machine learning model may comprise any suitable supervised classification algorithm, including but not limited to a neural network, a decision tree, a logistic regression model, a support vector machine, a random forest, or a stochastic gradient boosting model.

The torque information may comprise: measurements from the torque sensors collected while driving the reference vehicles through a number of predefined driving scenarios.

Generating torque classifications may comprise classifying torques of the driveshaft as a normal torque or as a high torque.

Predicting overtorque events of the driveshaft of the vehicle may comprise predicting that an overtorque event has happened if, during a time window, a number of torques classified as high torques exceeds a predetermined threshold.

The time window may comprise five seconds and/or the predetermined threshold may be determined based on a maximal torque that a motor of the vehicle can generate.

According to a second aspect, it is provided a computer program comprising instructions which, when the program is executed by a computer, causes the computer to perform the above described method.

According to a third aspect, it is provided an apparatus comprising a processor configured to perform the method above described.

According to a fourth aspect, it is provided a non-transitory computer-readable storage medium having stored thereon the above computer program.

### Brief Description of Drawings

Figure 1 illustrates a block diagram of an apparatus according to an embodiment.
Figure 2A illustrates a flowchart schematically depicting a method for selecting a machine learning algorithm according to an embodiment.
Figure 2B shows an example of an implementation of a function for performing preprocessing of the collected reference data in the method of Figure 2A.
Figure 2C shows an example of an implementation of a function for performing hyperparameter tuning in the method of Figure 2A.
Figure 2D shows an example of an implementation of the method of Figure 2A.
Figure 3A illustrates a flowchart schematically depicting a method for predicting overtorque events of a vehicle according to an embodiment.
Figure 3B shows an example of an implementation of a method for predicting overtorque events of a vehicle.
Figure 4 illustrates an example of a plot showing overtorque classifications over time.

### Description of Embodiments

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles.

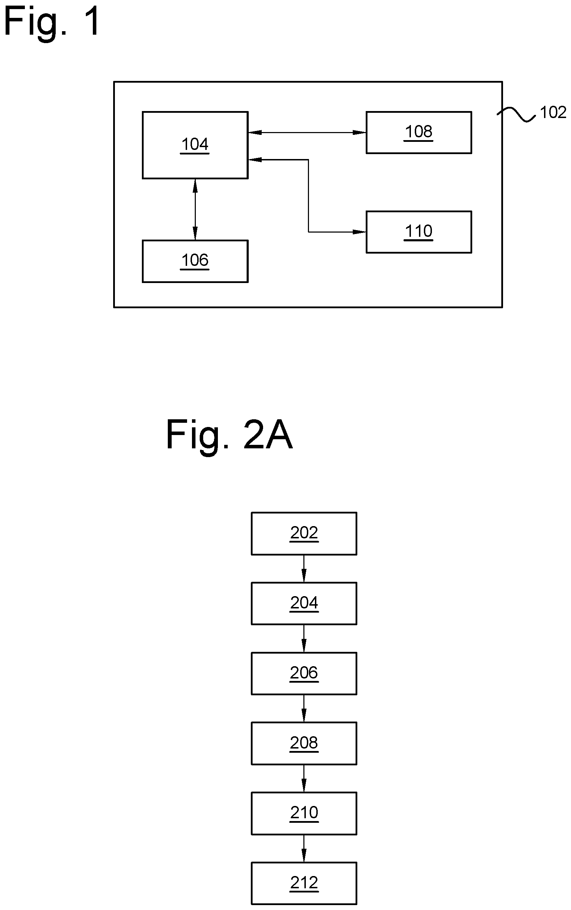

Figure 1 illustrates a block diagram of an apparatus 102 for performing a method for predicting overtorque events according to an embodiment. The apparatus 102 may comprise a processor unit 104, a memory 106, an input/output unit 108, and a communication unit 110. The processor unit 104 may comprise a Central Processing Unit, CPU, which is connected to the input/output unit 108, the memory 106, the communication unit 110.

The input/output unit 108 may comprise any known device to allow an operator to generate data and instructions for the processor unit 104, like a keyboard, a mouse, one or more touch screens, etc. The input/output unit 108 may comprise any suitable output device to output data to an operator including a display, etc.

The memory 106 may comprise any suitable known memory devices to store data and computer programs to be run on the processor unit 104, and may include any known type of volatile and non-volatile memory equipment, RAM and ROM types of memories, etc. The computer programs comprise instructions to be loaded by the processor unit 104.

The communication unit 110 is configured to transmit signals to and receive signals from equipment outside the processor unit 104. Any known and suitable transceiver equipment can be used for that purpose using any known or still to be developed (standard) communication technique including 2G, 3G, 4G, 5G, Wifi, Bluetooth, NFC, etc. To that end the communication unit 110 may be connected to a network and an antenna. The apparatus 102 of Figure 1 may be arranged to receive and/or send information from/to one or more sensors of a vehicle.

Figure 2A illustrates a flowchart schematically depicting a method for selecting a machine learning model. The method of Figure 2A may be performed by the apparatus 102 of Figure 1. The machine learning model selected according to Figure 2A may be trained and used for predicting overtorque events of a driveshaft of a vehicle without using a direct measurement of a torque of the driveshaft of the vehicle by collecting vehicle data related to the vehicle, preprocessing the vehicle data, applying the trained machine learning model to the pre-processed vehicle data to generate torque classifications, and predicting overtorque events of the driveshaft of the vehicle based on the generated torque classifications. The machine learning model of Figure 2A may be developed and trained based on reference data collected from a plurality of reference vehicles. The reference data may comprise torque information received from torque sensors of the reference vehicles.

In step 202 of the method of Figure 2A, the reference data is collected by performing series of measurements over time from a plurality of reference vehicles. The reference vehicles comprise torque sensors and might be specially designed for testing purposes. The reference vehicles may be driven on a test track in a number of predefined driving scenarios to simulate different driver behavior and environments. The measurements for collecting the reference data may be performed at different times after or before the reference vehicles are driven on the test tracks.

The reference data collected in step 202 comprises torque information. The torque information has been received from the torque sensors of one or more of the reference vehicles.

The reference data collected in step 202 from a reference vehicle may further comprise information indicating at least one of a time stamp identifying a time at which the reference data of the reference vehicle was collected, a longitudinal acceleration of the reference vehicle, a traction battery current of the reference vehicle, a traction battery voltage of the reference vehicle, a speed of the reference vehicle, a front-left wheel speed of the reference vehicle, a front-right wheel speed of the reference vehicle, and a drivetrain type of the reference vehicle.

After step 202, the method of Figure 2A proceeds to step 204 wherein the reference data collected from the one or more reference vehicles in step 202 is pre-processed to make it suitable for the next steps of the method. If the reference data collected in step 202 for a reference vehicle indicates the drive train type of the drive train of the reference vehicle, then said information indicating the drive train type may be preprocessed in step 204 by assigning a binary value to the drivetrain type. The binary value may be assigned based on whether the drivetrain is an all-wheel drive train, AWD or a front-wheel drive train, FWD. For instance, a zero may be assigned if the drive train is AWD and a one otherwise or vice versa. In this way, a binary value to designate whether the reference vehicle is AWD or FWD is generated.

If the reference data collected in step 202 for a reference vehicle comprises information about the traction battery current of the reference vehicle, then said information indicating the traction battery current may be preprocessed in step 204 by assigning a predetermined maximum value to the traction battery current of the reference vehicle exceeding a traction battery current threshold. This allows clipping extreme (likely erroneous) battery current measurements from the collected reference data.

If the reference data collected in step 202 for a reference vehicle comprises information about the traction battery current and the traction battery voltage of the reference vehicle, then said information indicating the traction battery current and the traction battery voltage may be preprocessed in step 204 by calculating a traction battery power feature, and discretizing the torque information.

Furthermore, the step 204 of preprocessing the reference data collected in step 202 comprises discretizing the torque information by assigning a high torque value to torque information indicating a torque higher or equal than a torque threshold and a low torque value to torque information indicating a torque lower than the torque threshold. For instance, all torque measurements greater than or equal to the torque threshold may be assigned the value '1' (high torque) and all torque measurements less than the torque threshold may be assigned the value '0' (low torque) in step 204. Due to the extreme imbalance in the reference data collected in step 202, (there may be far more records with normal torque than with high torque), a technique called "SMOTE" may be used in step 204 to oversample the minority class (high torque) to mitigate problems resulting from the extreme imbalance.

Optionally, the preprocessing of step 204 may comprise oversampling the torque information with a high torque value by using a synthetic minority oversampling technique.

The preprocessing step 204 may further include filtering out collected reference data with missing values.

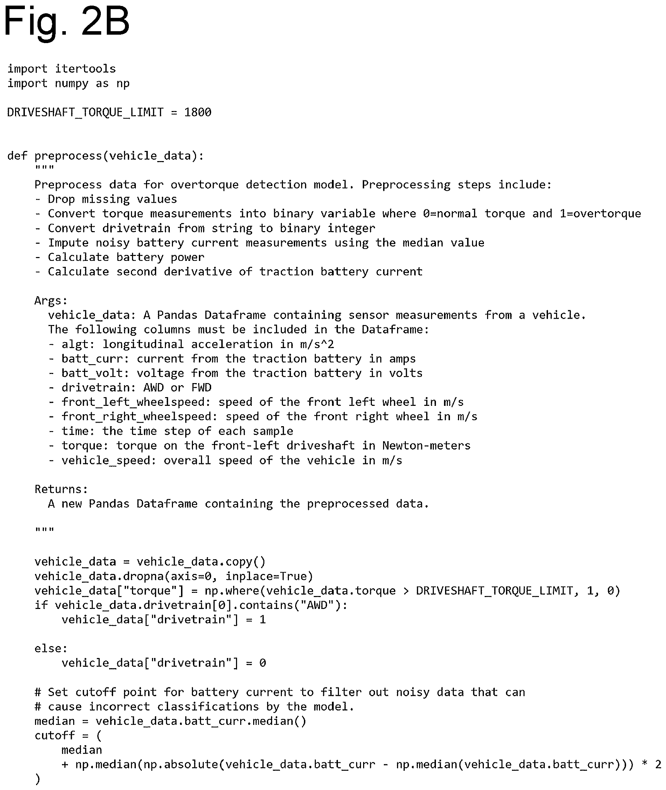

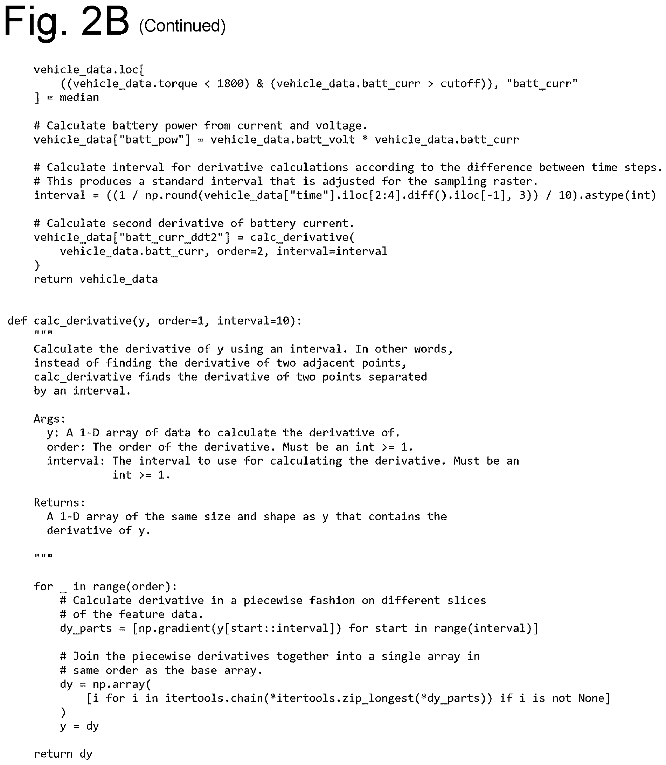

Figure 2B shows an example of an implementation of a function for performing preprocessing the collected reference data of step 204.

After step 204, the method of Figure 2A proceeds to step 206 wherein feature selection is performed. In step 206, it is determined which feature will be used by the machine learning model among the at least one of the time stamp, the longitudinal acceleration, the traction battery current, the traction battery voltage, the speed of the reference vehicle, the front-left and front-right wheel speed, the drivetrain type or any other information comprised in the collected reference data. In step 206, a variety of techniques can be used to identify features that are significant to the machine learning model, including statistical filters (such as Kendall's rank correlation, mutual information between prospective features and the target variable, and MultiSURF), wrapper methods such as recursive feature elimination, and embedded methods such as LASSO.

After step 206, the method of Figure 2A proceeds to step 208, wherein the machine learning model is selected. In this step, many different statistical and machine learning models are fitted to the data obtained after step 206. For instance, step 208 may use as machine learning models logistic regression, decision tree, support vector machine, random forest, stochastic gradient boosting (SGB), etc. The machine learning model with the best performance and other desirable properties (parsimony, interpretability, efficiency) is chosen in step 206. However, step 208 could use any other way of selecting the machine learning model.

After step 208, the method proceeds to step 210 wherein hyperparameter tuning is performed if needed. Many machine learning models based on trees, including stochastic gradient boosting (SGB), have several so-called "hyperparameters" that need to be tuned to achieve the best performance from the selected machine learning model. The hyperparameters for SGB may be used to control, for instance, the number of trees in the ensemble of the trees, the maximum depth of the trees, number of features that each tree can use, etc. For instance, if the selected machine learning model is the SGB model, then nine or more hyperparameters may be tuned. If SMOTE is applied, then two additional hyperparameters may be tuned in step 208 or later on in step 212 wherein the selected machine learning model is validated. The search space for trying all possible combinations for eleven hyperparameters is very large. Therefore, step 208 may use a population-based stochastic search heuristic called "particle swarm optimization", or any other suitable stochastic search heuristic, instead of conducting an exhaustive search of all the possible hyperparameter values.

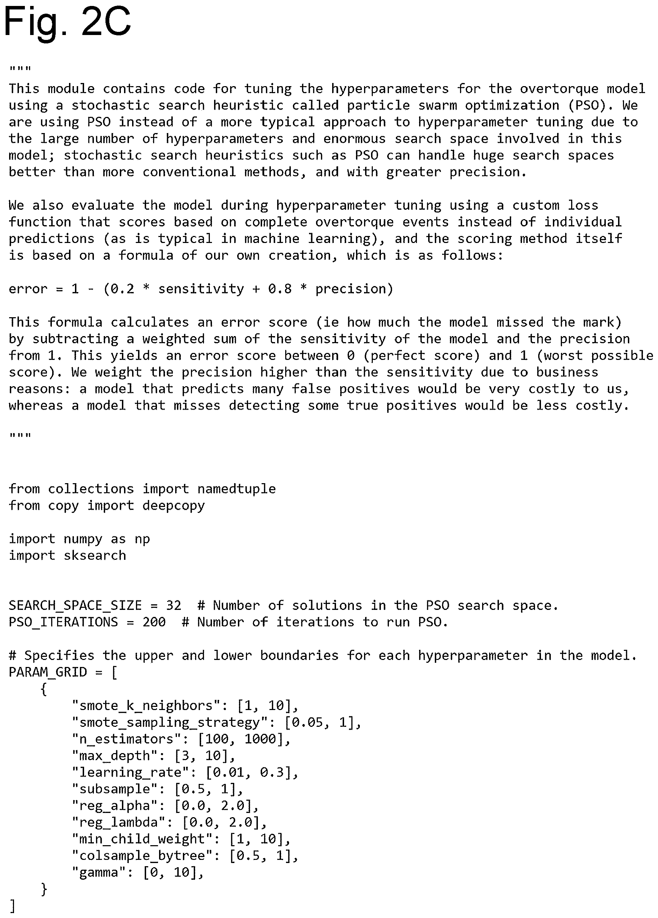

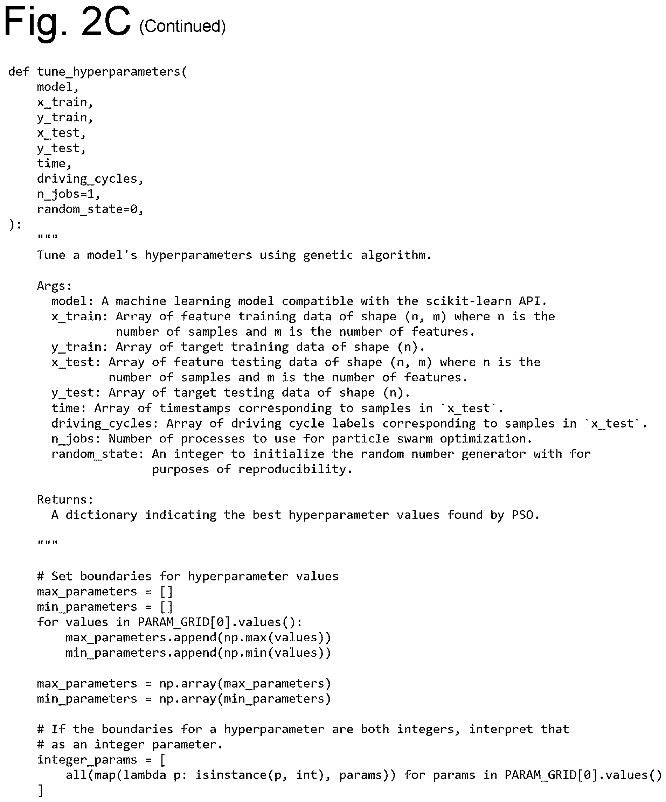

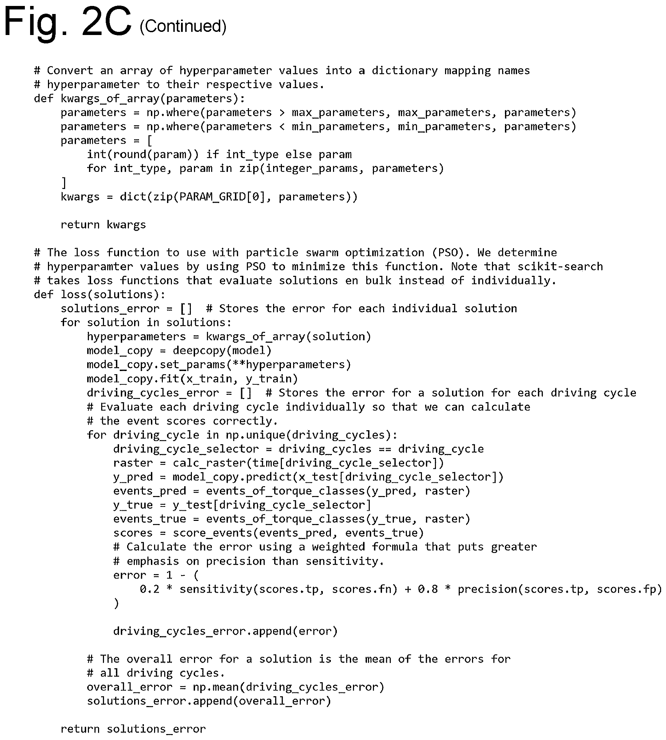

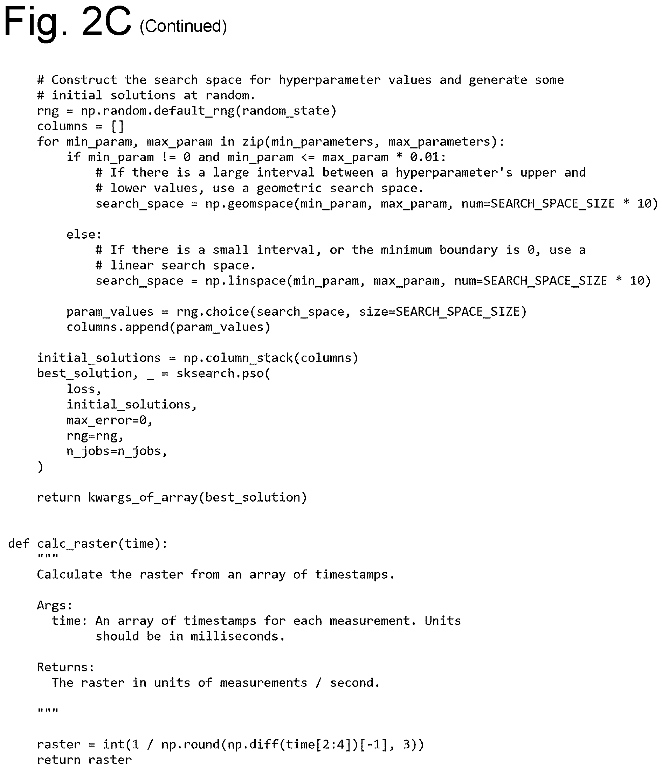

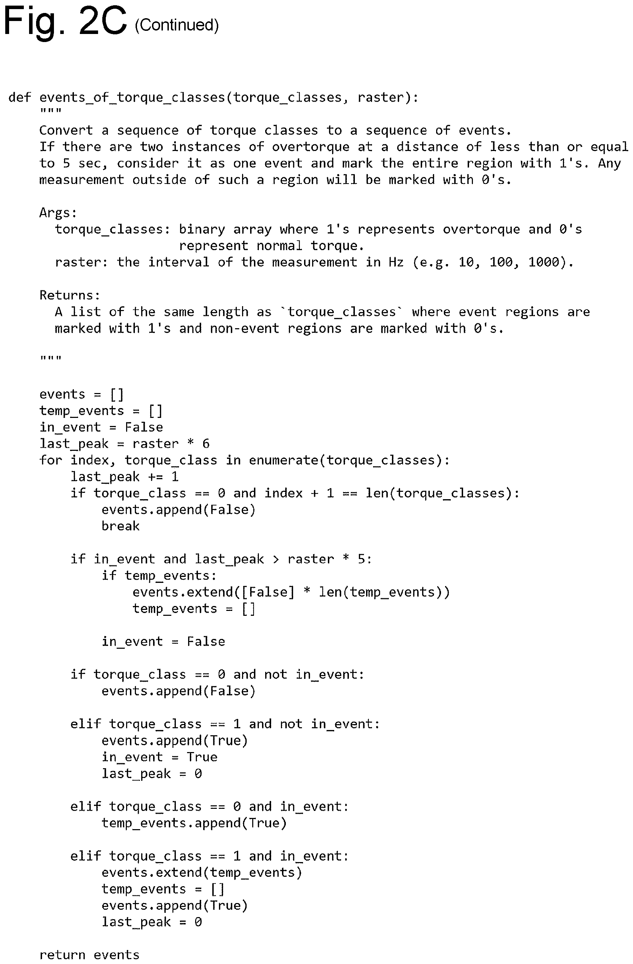

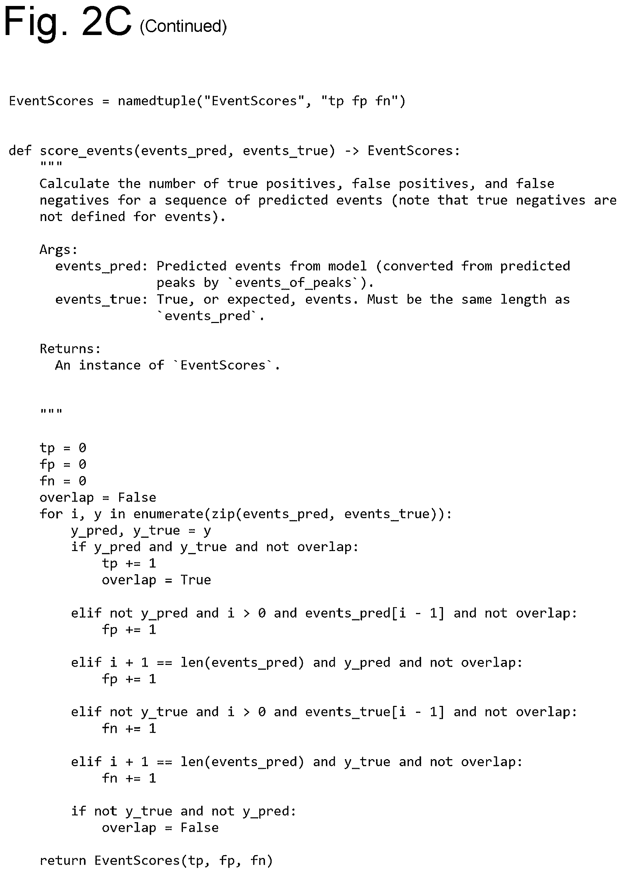

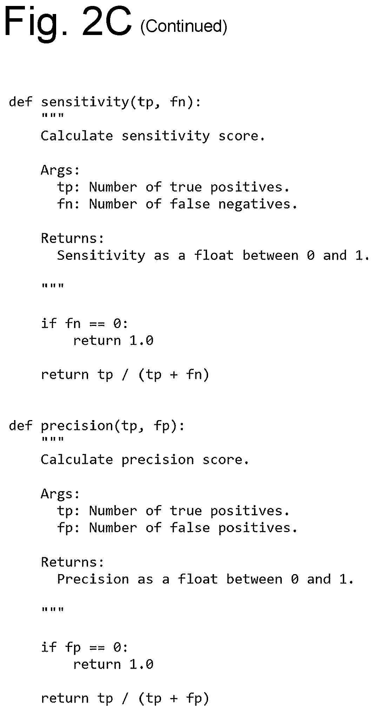

Figure 2C shows an example of an implementation of a function for performing hyperparameter tuning of step 206.

After step 208, a postprocessing step, not shown in Figure 2A, may be performed every time the selected machine learning model is used to generate torque classifications by classifying torques as normal or high torques. The postprocessing step comprises grouping series of high torque predicted classifications together as overtorque events, where a single overtorque event includes a first high torque predicted classification for the corresponding series and all the following ones also classified as high torque until a predefined period (for example, 5 seconds) of normal torque predicted classifications without instances of a high torque predicted classification has occurred.

In step 210, the selected machine learning model is validated by evaluating it based on several different performance metrics and visualizations using a technique called "cross-validation". In step 210, the selected machine learning model is evaluated based on overtorque events, not on individual generated torque classifications. Performance metrics that may be used in the validation process of step 210 include precision, sensitivity, and F1 score, or any other binary classification metrics. At step 210, time series plots of predicted false positive and false negative overtorque events may be generated to allow to manually examine the severity of the incorrectly classified overtorque events.

The machine learning model developed according to the method of Figure 2A may be trained using a conventional supervised classification algorithm, exemplified but not limited to, an established implementation such as XGBoost. The training process may involve the application of the machine learning model to label reference data to develop a predictive model capable of classification tasks. Specifically, the training of the machine learning model may employ a form of stochastic gradient boosting to fit an ensemble of decision trees to data. This fitting process is directed by optimizing a standard objective function, which is chosen based on the specific requirements of the classification task at hand, such as minimizing prediction error. The objective function's optimization ensures the machine learning model is accurately able to classify new, unseen data based on the patterns learned from the labeled dataset.

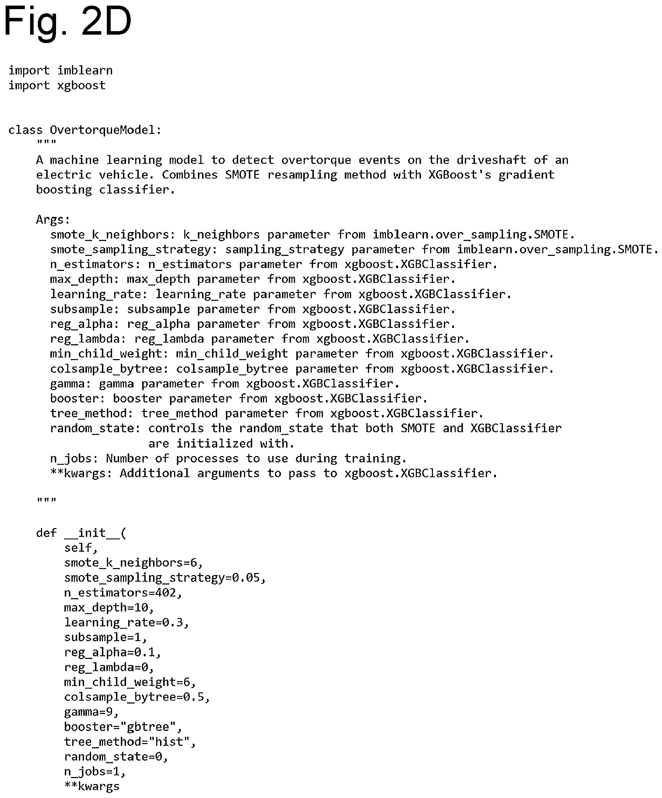

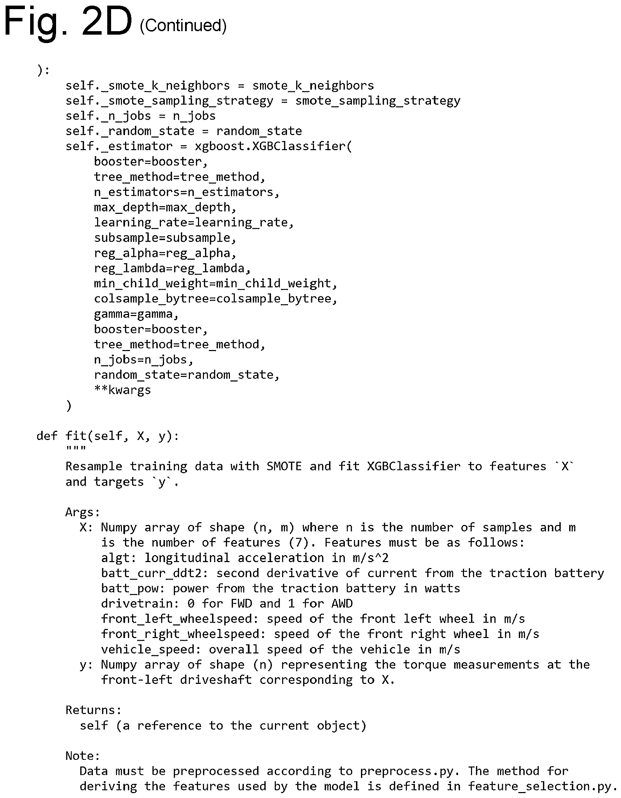

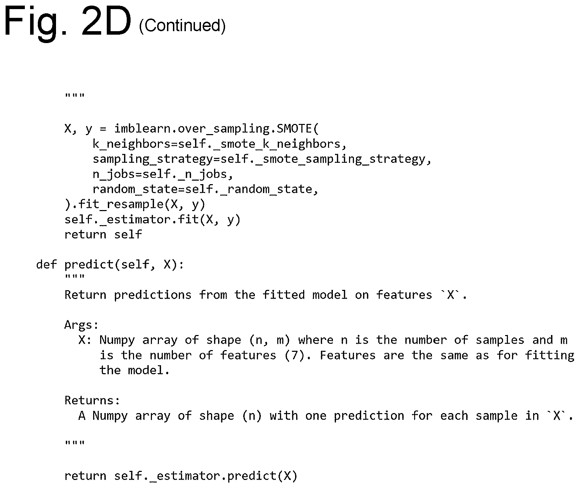

Figure 2D shows an example of an implementation of a machine learning algorithm developed according to the method of Figure 2A.

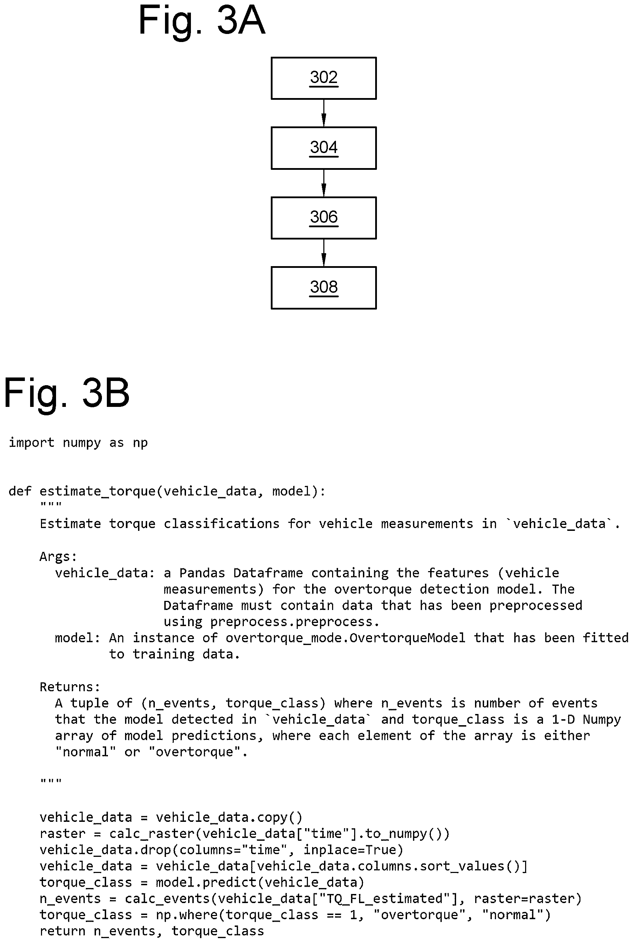

Figure 3A illustrates a flowchart of a computer implemented method to predict overtorque events for a vehicle using a machine learning model that might have been selected using the method of Figure 2A. The method of Figure 3A may be performed by the apparatus of Figure 1 and may be performed in the vehicle or somewhere else. The computer implemented method for predicting overtorque events of a driveshaft of a vehicle without using a direct measurement of a torque of the driveshaft of the vehicle comprises collecting vehicle data related to the vehicle, preprocessing the vehicle data, applying a trained machine learning model to the pre-processed vehicle data to generate torque classifications, and predicting overtorque events of the driveshaft of the vehicle based on the generated torque classifications. The trained machine learning model used in the method of Figure 3A has been developed based on reference data collected from a plurality of reference vehicles wherein the reference data comprising torque information received from torque sensors of the reference vehicles. The method of Figure 3A may use the machine learning method developed according to the method of Figure 2A. The method of Figure 3A may use any other suitable machine learning method that has been developed based on reference data collected from a plurality of reference vehicles wherein the reference data comprising torque information received from torque sensors of the reference vehicles.

In step 302 of the method of Figure 3A, the vehicle data is collected by performing series of measurements over time from the vehicle. The vehicle may comprise one or more sensors arranged to provide the vehicle data. The apparatus of Figure 1 may be arranged to receive the vehicle data from the vehicle. The vehicle may be driven on a test track in a number of predefined driving scenarios to simulate different driver behavior and environments. The measurements for collecting the vehicle data may be performed at different times after or before the vehicle is driven on the test tracks.

The vehicle data collected in step 302 from the vehicle may further comprise information indicating at least one of a time stamp identifying a time at which the vehicle data of the vehicle was collected, a longitudinal acceleration of the vehicle, a traction battery current of the vehicle, a traction battery voltage of the vehicle, a speed of the vehicle, a front-left wheel speed of the vehicle, a front-right wheel speed of the vehicle, and a drivetrain type of the vehicle.

After step 302, the method of Figure 3A proceeds to step 304 wherein the vehicle data collected from the vehicle in step 302 is pre-processed to make it suitable for the next steps of the method. If the vehicle data collected in step 302 for the vehicle indicates the drive train type of the drive train of the vehicle, then said information indicating the drive train type may be preprocessed in step 304 by assigning a binary value to the drivetrain type. The binary value may be assigned based on whether the drivetrain is an all-wheel drive train, AWD or a front-wheel drive train, FWD. For instance, a zero may be assigned if the drive train is AWD and a one otherwise or vice versa. In this way, a binary value to designate whether the reference vehicle is AWD or FWD is generated.

If the vehicle data collected in step 302 for the vehicle comprises information about the traction battery current of the reference vehicle, then said information indicating the traction battery current may be preprocessed in step 304 by assigning a predetermined maximum value to the traction battery current of the vehicle exceeding a traction battery current threshold. This allows clipping extreme (likely erroneous) battery current measurements from the vehicle data.

If the vehicle data collected in step 302 for the vehicle comprises information about the traction battery current and the traction battery voltage of the vehicle, then said information indicating the traction battery current and the traction battery voltage may be preprocessed in step 304 by calculating a traction battery power feature, and discretizing the torque information.

The preprocessing step 304 may further include filtering out collected vehicle data with missing values.

After step 304, the method of Figure 3A proceeds to step 306 wherein a machine learning method is applied to the preprocessed vehicle data of step 304 to predict torque classifications. Figure 2D shows an example of an implementation of a machine learning algorithm developed according to the method of Figure 2A that can be used in step 304 of the method of Figure 304.

The machine learning method applied in step 306 may have been developed according to the method of Figure 2A. However, any other suitable machine learning method that has been developed based on reference data collected from a plurality of reference vehicles wherein the reference data comprising torque information received from torque sensors of the reference vehicles may be applied in step 306. The machine learning method may be applied in step 306 to the preprocessed vehicle data from the vehicle to produce torque classifications for each time point at which measurements have been taken in step 302. For instance, if one-hundred measurements have been taken and preprocessed fed into the model, the model will produce one-hundred torque classifications (one for each time point).

After step 306, the method of Figure 3A proceeds to step 308 to perform postprocessing of the torque classifications predicted in step 306 and compute overtorque events of the driveshaft of the vehicle based on the predicted torque classifications. In step 308, the torque classifications predicted in step 306 are grouped into overtorque events to meaningfully be used and interpreted. After step 308, the computed overtorque events can be used in a variety of different ways, depending on the specific use-case.

For example, for the purposes of dimensioning the drive shaft, the number of estimated events per 1000 kilometers may be broken down per vehicle and visualized as a bar plot, or the model features (vehicle speed, acceleration, etc.) may be visualized as a time series plot and used as an input to the dimensioning.

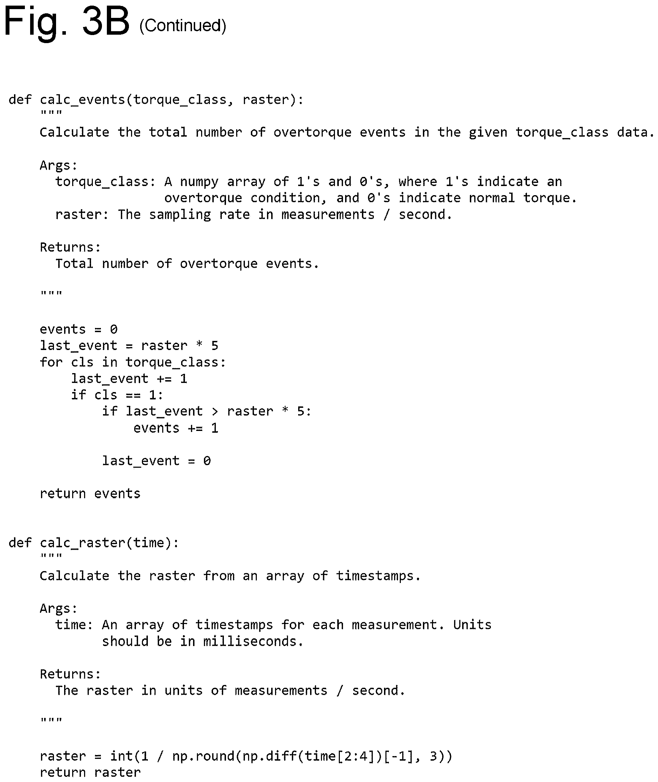

Figure 3B shows an example of an implementation of the method of Figure 3A for predicting overtorque events of the vehicle.

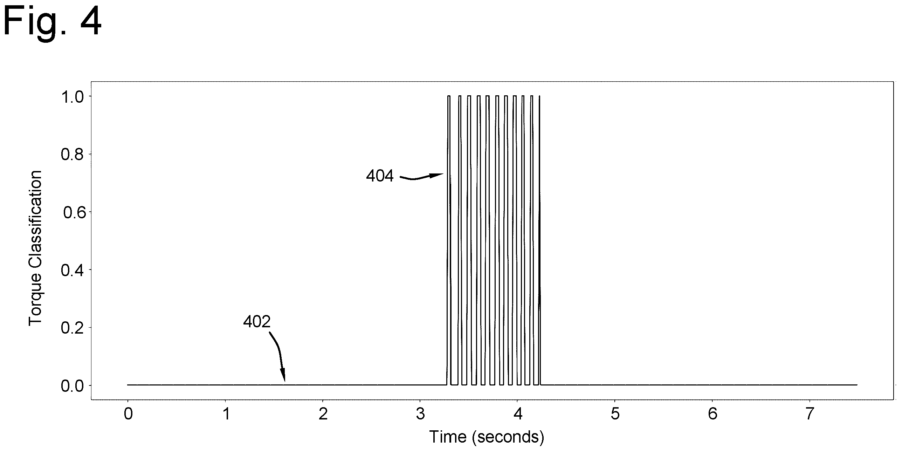

Figure 4 illustrates an example of a plot showing overtorque classifications over time. The horizontal axis of the plot of Figure 4 represents time in seconds while the vertical axis represents torque classifications. 306 The torque classifications are generated by classifying torques of the driveshaft as a normal torque 402 or as a high torque 404. The method of Figure 3A predicts that an overtorque event of the driveshaft of the vehicle has happened if, during a time window, a number of torques classified as high torques exceeds a predetermined threshold. The time window may comprise five seconds. The predetermined threshold may be determined based on a maximal torque that a motor of the vehicle can generate.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims .

## Claims

1. A computer implemented method for predicting overtorque events of a driveshaft of a vehicle without using a direct measurement of a torque of the driveshaft of the vehicle, the method comprising:
collecting vehicle data related to the vehicle;
preprocessing the vehicle data;
applying a trained machine learning model to the pre-processed vehicle data to generate torque classifications; and
computing overtorque events of the driveshaft of the vehicle based on the generated torque classifications;
wherein the trained machine learning model has been developed based on reference data collected from a plurality of reference vehicles, the reference data comprising torque information received from torque sensors of the reference vehicles.

2. The method according to claim 1, wherein the vehicle data indicates at least one of: a time stamp identifying a time at which the data was collected, a longitudinal acceleration of the vehicle, a traction battery current of the vehicle, a traction battery voltage of the vehicle, a speed of the vehicle, a front-left wheel speed of the vehicle, a front-right wheel speed of the vehicle, and a drivetrain type of the vehicle.

3. The method according to claim 2 wherein preprocessing the vehicle data comprises at least one of: if the vehicle data indicates the drivetrain type, assigning a binary value to the drivetrain type of the vehicle based on whether the drive train is an all-wheel drive train, AWD or a front-wheel drive train, FWD; if the vehicle data indicates the traction battery current, assigning a predetermined value to traction battery current exceeding a traction battery current threshold; and, if the vehicle data indicates the traction battery current and the traction battery voltage, calculating a traction battery power feature based on the traction battery current and voltage.

4. The method according to claim 1 wherein the collected reference data indicates at least one of: a time stamp identifying a time at which the reference data was collected, a longitudinal acceleration of the reference vehicle, a traction battery current of the reference vehicle, a traction battery voltage of the reference vehicle, a speed of the reference vehicle, a front-left wheel speed of the reference vehicle, a front-right wheel speed of the reference vehicle, and a drivetrain type of the reference vehicle.

5. The method according to claim 4 wherein the collected reference data has been preprocessed by performing at least one of: if the collected data indicates the drivetrain type, assigning a binary value to the drivetrain type of the reference vehicle based on whether the drivetrain is an all-wheel drive train, AWD or a forward wheel drive train, FWD; if the collected data indicates the traction battery current, assigning a predetermined maximum value to traction battery current of the reference vehicle exceeding a traction battery current threshold; and, if the collected data indicates the traction battery current and the traction battery voltage, calculating a traction battery power feature, and discretizing the torque information.

6. The method according to claim 5, wherein discretizing the torque information comprises assigning a high torque value to torque information indicating a torque higher or equal than a torque threshold and a low torque value to torque information indicating a torque lower than the torque threshold.

7. The method according to claim 6, further comprising oversampling the torque information with a high torque value by using a synthetic minority oversampling technique.

8. The method according to any of the preceding claims, wherein the trained machine learning model may comprise a neural network, a decision tree, a logistic regression model, a support vector machine, a random forest, or a stochastic gradient boosting model.

9. The method according to any of the preceding claims, wherein the torque information comprises: measurements from the torque sensors collected while driving the reference vehicles through a number of predefined driving scenarios.

10. The method according to any of the preceding claims, wherein generating torque classifications comprises classifying torques of the driveshaft as a normal torque or as a high torque.

11. The method according to claim 10, wherein computing overtorque events of the driveshaft of the vehicle comprises determining that an overtorque event has happened if, during a time window, a number of torques classified as high torques exceeds a predetermined threshold.

12. The method according to claim 11 wherein the time window comprises five seconds and/or the predetermined threshold is determined based on a maximal torque that a motor of the vehicle can generate.

13. A computer program comprising instructions which, when the program is executed by a computer, causes the computer to perform the method of any of claims 1-12.

14. An apparatus comprising a processor configured to perform the method of any of claims 1-12.

15. A non-transitory computer-readable storage medium having stored thereon the computer program of claim 13.
